(19)

Europäisches
Patentamt
European
Patent Office
Office européen
des brevets

(11) **EP 4 393 798 A1**

(12) **EUROPEAN PATENT APPLICATION**

published in accordance with Art. 153(4) EPC

(43) Date of publication:
**03.07.2024 Bulletin 2024/27**

(21) Application number: **21958735.9**

(22) Date of filing: **29.09.2021**

(51) International Patent Classification (IPC):
**B62D 137/00** (2006.01)  **B62D 6/00** (2006.01)

(52) Cooperative Patent Classification (CPC):
**B62D 6/002; B62D 15/027; B62D 1/00**

(86) International application number:
**PCT/CN2021/121701**

(87) International publication number:
**WO 2023/050145 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
 • **WANG, Hui**
**Shenzhen, Guangdong 518129 (CN)**

 • **LI, Ping**
**Shenzhen, Guangdong 518129 (CN)**
 • **DONG, Yunfei**
**Shenzhen, Guangdong 518129 (CN)**
 • **SONG, Tianzhu**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR CONTROLLING VEHICLE**

(57) This application provides a method and an apparatus for vehicle control. The method includes: determining, based on first status information of a vehicle, that the vehicle satisfies a condition to perform a steering return, where the first status information of the vehicle includes information that an initial turning angle of a turning wheel of the vehicle is greater than a first threshold; determining, based on second status information of the vehicle, that a user has a need to park for a long time, where the second status information includes status change information of the vehicle, and the status change information of the vehicle is used to determine that the user has the need to park for a long time; and performing a steering return process in a first preset time period based on a first function, where the steering return process is used to change the initial turning angle of the turning wheel. Reliability of controlling a return process of the turning wheel can be improved by determining that the vehicle satisfies the condition to perform the steering return and that the user has the need to park for a long time, and by performing the steering return process in the first preset time period.

FIG. 3

EP 4 393 798 A1

**Description**

**TECHNICAL FIELD**

This application relates to the automobile field, and more specifically, to a vehicle control method and apparatus.

**BACKGROUND**

When a vehicle is parked, a turning wheel may be at a large turning-angle. In this state, an aligning moment caused by gravity of a vehicle body cannot be released due to a kingpin inclination angle of the wheel and static friction between a tire and ground. As a result, chassis components of the vehicle, such as a tie rod, a steering knuckle, and a suspension walking arm, may be subject to tension and compressive stress in a non-design condition. Long-term tension and compressive stress will accelerate deformation and failure of these components, especially for rubber components, such as a shock-absorbing bushing and a sealing ring. Therefore, parking with the turning wheel at a large turning-angle may affect an overall service life of the vehicle. In addition, a safety hazard may be caused when the vehicle starts up again.

**SUMMARY**

This application provides a vehicle control method. According to the method, when a user has a need to park for a long time, a turning wheel at a large turning-angle is controlled to automatically return to the straight direction, to improve reliability of controlling a return process of the turning wheel.

According to a first aspect, a vehicle control method is provided. The method includes: determining, based on first status information of a vehicle, that the vehicle needs to perform a steering return, where the first status information includes information that an initial turning angle of a turning wheel of the vehicle is greater than a first threshold; determining, based on second status information of the vehicle, that a user has a need to park for a long time, where the second status information includes status change information of the vehicle; and performing a steering return process in a first preset time period, where the steering return process is used to change the initial turning angle of the turning wheel.

In this embodiment of this application, it is determined that the vehicle satisfies a condition to perform the steering return by determining the first status information of the vehicle. In addition, it can be determined, based on the second status information of the vehicle, that the user has a need to park for a long time, and the second status information includes the status change information of the vehicle. Reliability of controlling a steering return process of the turning wheel can be improved by determining that the user has the need to park for a long time.

With reference to the first aspect, in some implementations of the first aspect, the status change information of the vehicle includes change information of a key switch, a one-button start switch, and at least one of an alternating current charging state, a direct current charging state, or a wireless charging state of the vehicle.

With reference to the first aspect, in some implementations of the first aspect, if it is determined that the key switch is switched from an on position to an off position, the one-button start switch is switched from an on state to an off state, and the vehicle is in the at least one of the alternating current charging state, the direct current charging state, or the wireless charging state, it is determined that the user has the need to park for a long time.

With reference to the first aspect, in some implementations of the first aspect, third status information of the vehicle is determined. The third status information indicates that the vehicle is currently capable of steering assistance. The third status information includes at least one of working status information of a steering system, working status information of a direct current-direct current converter, and working status information of a main power source of the vehicle.

With reference to the first aspect, in some implementations of the first aspect, the steering return process is performed based on a first function in the first preset time period. The first function represents a kinematic characteristic of the turning wheel, and first-order differentials of the first function at a start point and an end point of the first preset time period are 0 or approach 0.

In this embodiment of this application, overload of a steering assistance motor caused by turning wheel lock in the steering return process can be avoided by performing the steering return process in the first preset time period. In addition, stability of the steering return can be ensured by performing the steering return process based on the first function, with the first-order differentials of the first function at the start point and the end point of the first preset time period being 0 or approaching 0, so as to reduce control difficulty and improve control precision.

With reference to the first aspect, in some implementations of the first aspect, the first function is represented by the following formula:

$$\theta(t) = \theta_{\max} \left[ \frac{t}{T} - \frac{1}{2\pi} \sin\left( 2\pi t \big/ T \right) \right]$$

$\theta_{\max}$ represents the initial turning angle of the turning wheel, $T$ represents duration of the first preset time period, and $\theta(t)$ represents a current angle that the turning wheel has returned. A difference between the initial turning angle of the turning wheel and the current angle that the turning wheel has returned is a current turning angle of the turning wheel.

With reference to the first aspect, in some implementations of the first aspect, a vehicle controller is requested to cut off the main power source of the vehicle after a second preset time period, where duration of the second preset time period is greater than or equal to the duration of the first preset time period.

The vehicle controller may include a vehicle control unit (vehicle control unit, VCU) or a controller of main power source (for example, a battery controller or an engine control unit). The main power source of the vehicle may be a vehicle power source providing energy for a system in the vehicle.

In this embodiment of this application, it can be ensured that electric energy of a subsequent self-return process of the turning wheel comes from the main power source by requesting a delayed cutting off of the main power source of the vehicle, so as to avoid a low state of battery caused by performing the steering return.

With reference to the first aspect, in some implementations of the first aspect, the main power source of the vehicle includes a drive apparatus and an energy source of the vehicle.

The drive apparatus can be configured to convert the energy source into mechanical energy. For example, the drive apparatus may be an internal combustion engine, an electric motor, an air compression engine, or a combination of other types of engines, for example, a hybrid engine including a gasoline engine and an electric motor, or a hybrid engine including an internal combustion engine and an air compression engine. The energy source may include gasoline, diesel, other oil-based fuels, propane, other compressed gas-based fuels, ethanol, a solar panel, a battery, and other power sources.

With reference to the first aspect, in some implementations of the first aspect, when it is determined that the first preset time period ends, the steering return process is stopped; or when it is determined that the initial turning angle of the turning wheel of the vehicle is less than a second threshold, the steering return process is stopped.

With reference to the first aspect, in some implementations of the first aspect, first information is sent to a user interface of the vehicle, where the user interface is configured to provide information for a user of the vehicle or receive information entered by a user of the vehicle, and the first information includes the information that the initial turning angle of the turning wheel is greater than the first threshold.

With reference to the first aspect, in some implementations of the first aspect, second information entered through the user interface is received after the first information is sent to the user interface of the vehicle. The steering return process is performed if the second information includes information about performing the steering return process; or the steering return process is exited if the second information includes information about not performing the steering return process.

With reference to the first aspect, in some implementations of the first aspect, a first timer is enabled after the first information is sent to the user interface of the vehicle; and the steering return process is exited if the information entered through the user interface is not received after the first timer expires.

According to a second aspect, a vehicle control apparatus is provided. The apparatus includes: a processing unit, where the processing unit is configured to determine, based on first status information of a vehicle, that the vehicle needs to perform the steering return, where the first status information includes information that an initial turning angle of a turning wheel of the vehicle is greater than a first threshold. The processing unit is further configured to determine, based on second status information of the vehicle, that a user has a need to park for a long time, where the second status information includes status change information of the vehicle. The processing unit is further configured to perform a steering return process in a first preset time period, where the steering return process is used to change the initial turning angle of the turning wheel.

With reference to the second aspect, in some implementations of the second aspect, the status change information of the vehicle includes change information of a key switch, a one-button start switch, and at least one of an alternating current charging state, a direct current charging state, or a wireless charging state of the vehicle.

With reference to the second aspect, in some implementations of the second aspect, the processing unit is specifically configured to: if it is determined that the key switch is switched from an on position to an off position, the one-button start switch is switched from an on state to an off state, and the vehicle is in the at least one of the alternating current charging state, the direct current charging state, or the wireless charging state, determine that the user has the need to park for a long time.

With reference to the second aspect, in some implementations of the second aspect, the processing unit is further configured to determine third status information of the vehicle, where the third status information indicates that the vehicle is currently capable of steering assistance. The third status information includes at least one of working status information of a steering system, working status information of a direct current-direct current converter, and working status information of a main power source of the vehicle.

With reference to the second aspect, in some implementations of the second aspect, the processing unit is specifically configured to perform the steering return process based on a first function in the first preset time period. The first function represents a kinematic characteristic of the turning wheel, and first-order differentials of the first function at a start point and an end point of the first preset time period are 0 or approach 0.

With reference to the second aspect, in some implementations of the second aspect, the first function is represented by the following formula:

$$\theta(t) = \theta_{\max} \left[ \frac{t}{T} - \frac{1}{2\pi} \sin\left( 2\pi t \big/ T \right) \right]$$

$\theta_{\max}$ represents the initial turning angle of the turning wheel, T represents duration of the first preset time period, and $\theta(t)$ represents a current angle that the turning wheel has returned. A difference between the initial turning angle of the turning wheel and the current angle that the turning wheel has returned is a current turning angle of the turning wheel.

With reference to the second aspect, in some implementations of the second aspect, the processing unit is further configured to request a vehicle controller to cut off the main power source of the vehicle after a second preset time period, where duration of the second preset time period is greater than or equal to the duration of the first preset time period.

With reference to the second aspect, in some implementations of the second aspect, the main power source of the vehicle includes a drive apparatus and an energy source of the vehicle.

With reference to the second aspect, in some implementations of the second aspect, the processing unit is further configured to stop performing the steering return process when it is determined that the first preset time period ends; or stop performing the steering return process when it is determined that the initial turning angle of the turning wheel of the vehicle is less than a second threshold.

With reference to the second aspect, in some implementations of the second aspect, the apparatus further includes a transceiver unit, configured to send first information to a user interface of the vehicle, where the user interface is configured to provide information for a user of the vehicle or receive information entered by a user of the vehicle, and the first information includes the information that the initial turning angle of the turning wheel is greater than the first threshold.

With reference to the second aspect, in some implementations of the second aspect, the transceiver unit is further configured to receive second information entered through the user interface. The processing unit is further configured to perform the steering return process if the second information includes information about performing the steering return process; or the processing unit is further configured to exit the steering return process if the second information includes information about not performing the steering return process.

With reference to the second aspect, in some implementations of the second aspect, the processing unit is further configured to enable a first timer; and exit the steering return process if the information entered through the user interface is not received after timing of the first timer expires.

According to a third aspect, a steering system is provided, including a memory and a processor. The memory stores computer program instructions, and the computer program instructions are run to enable the processor to implement the method according to the first aspect and any of the possible implementations of the first aspect.

According to a fourth aspect, a vehicle is provided, including a memory and a processor. The memory stores computer program instructions, and the computer program instructions are run to enable the processor to implement the method according to the first aspect and any of the possible implementations of the first aspect.

According to a fifth aspect, a vehicle control apparatus is provided, including a memory and a processor. The memory stores computer program instructions, and the computer program instructions are run to enable the processor to implement the method according to the first aspect and any of the possible implementations of the first aspect.

According to a sixth aspect, a vehicle control apparatus is provided, including a processor and an interface circuit. The processor is coupled to a memory through the interface circuit, and the processor is configured to execute program code in the memory, so as to implement the method according to the first aspect and any of the possible implementations of the first aspect.

According to a seventh aspect, a computer-readable storage medium is provided. The computer-readable storage medium stores a computer program. When the computer program is executed by a processor, a vehicle control apparatus is enabled to implement the method according to the first aspect and any of the possible implementations of the first aspect.

According to an eighth aspect, a computer program product including instructions is provided. When the instructions are executed by a processor, a vehicle control apparatus is enabled to implement the method according to the first aspect and any of the possible implementations of the first aspect.

**BRIEF DESCRIPTION OF DRAWINGS**

FIG. 1 is a schematic diagram of a vehicle steering system according to an embodiment of this application;
FIG. 2 is a schematic diagram of a turning angle of a turning wheel according to an embodiment of this application;
FIG. 3 is a flowchart of a vehicle control method according to an embodiment of this application;
FIG. 4 is a diagram of a curve of a first function according to an embodiment of this application;
FIG. 5 is a diagram of a human-computer interaction interface according to an embodiment of this application;
FIG. 6 is a diagram of another human-computer interaction interface according to an embodiment of this application;
FIG. 7 is a structural block diagram of a vehicle control apparatus 700 according to an embodiment of this application;
FIG. 8 is a structural block diagram of a controller 110 according to an embodiment of this application; and
FIG. 9 is a structural block diagram of a vehicle 900 according to an embodiment of this application.

**DESCRIPTION OF EMBODIMENTS**

The following describes technical solutions of this application with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" refer to one, two, or more.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

The technical solutions in embodiments of this application may be applied to a steering system (steering system) of a vehicle. The steering system of the vehicle is configured to control a direction of travel or reverse of the vehicle according to a driver's intention or a control instruction. For example, common steering systems include an electric power steering (electric power steering, EPS) control system, an electrically powered hydraulic steering (electrically powered hydraulic steering, EHPS) system, and the like.

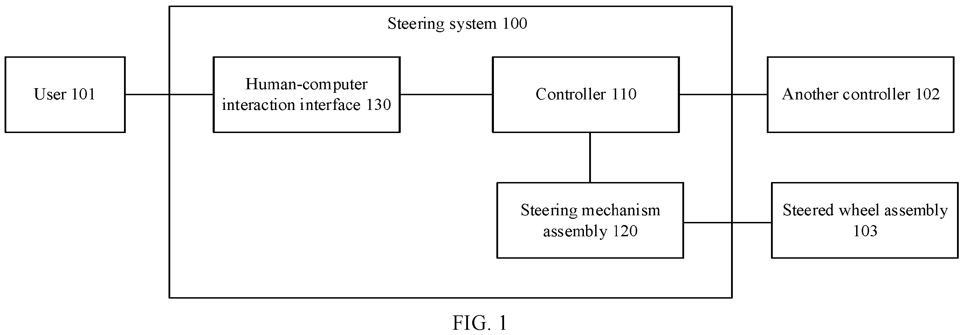

FIG. 1 is a diagram of an example architecture of a steering system according to an embodiment of this application. As shown in FIG. 1, the steering system 100 includes a controller 110 and a steering mechanism assembly 120. The controller 110 may be configured to output a control instruction, so as to control the steering mechanism assembly 120 to output a steering torque to a turning wheel assembly 103. The controller 110 may generate the control instruction based on a steering intention of a driver or based on information of another controller 102. For example, the controller 110 generates the control instruction based on a steering requirement entered by the driver through a steering wheel, or generates the control instruction based on requirements for a longitudinal moment and a yaw moment of a vehicle that are determined by a controller of an advanced driving assistant system (advanced driving assistant system, ADAS). The steering mechanism assembly 120 may include a steering execution mechanism, a turning angle displacement sensor, and a power-assisted apparatus. Optionally, the steering system 100 may further include a user interface 130, where the user interface 130 may include one or more input/output devices, such as a human-computer interaction interface, a microphone, and a speaker. Information interaction between the controller and a user 101 may be implemented through the user interface 130, so as to enable more intelligent and user-friendly steering control.

The vehicle may be a conventional vehicle, a new energy vehicle, an intelligent vehicle, or the like. The conventional vehicle is a vehicle that provides energy with gasoline, diesel, or the like. The new energy vehicle is a newly emerged vehicle that provides energy with a new energy source such as electric energy or gas. The intelligent vehicle is a vehicle mounted with an intelligent device such as an intelligent control unit. A vehicle type of the vehicle may include, for example, a car, a truck, a passenger car, an engineering vehicle, or a bus. This is not specifically limited in this embodiment of this application.

When a vehicle is parked, a turning wheel may be at a large turning-angle. In this state, an aligning moment caused by gravity of a vehicle body cannot be released, which may cause chassis components of the vehicle to be subject to tension and compressive stress in a non-design condition. Long-term tension and compressive stress will accelerate deformation and failure of these components, especially for rubber components therein. Therefore, parking with the turning wheel at a large turning-angle may affect an overall service life of the vehicle. In addition, a safety hazard may be caused when the vehicle starts up again. In view of this, this application provides a vehicle control method. According to the method, when a user has a need to park for a long time, a turning wheel at a large turning-angle may be controlled to perform the steering return. The method can improve reliability of controlling a self-return process of the turning wheel.

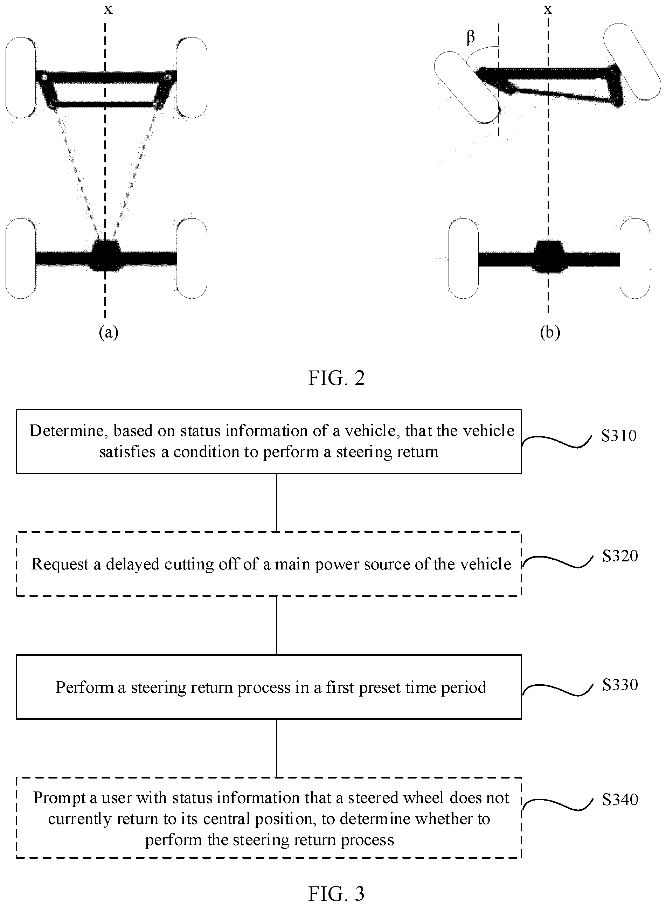

In this embodiment of this application, the turning wheel at a large turning-angle may mean that there is a large included angle between the turning wheel and a longitudinal symmetry axis of the vehicle. As shown in (b) of FIG. 2, there is an included angle β between the turning wheel and a longitudinal symmetry axis x of the vehicle. When the included angle β exceeds a threshold, it may be considered that the turning wheel is at a large turning-angle. The included angle β may be referred to as an initial turning angle of the turning wheel. The threshold may be set based on an actual situation, and this is not limited in this application.

It should be understood that, in this embodiment of this application, both "controlling a steering return" and "performing a steering return process" may refer to controlling the turning wheel at a large turning-angle to return to a state (an aligned state) with no included angle or a small included angle between the turning wheel and the longitudinal symmetry axis of the vehicle, as shown in (a) of FIG. 2. A steering self-return may refer to a process in which a controller determines that the vehicle satisfies a condition of the steering return and controls the turning wheel to return. The process may be performed by the controller instead of a human.

With reference to FIG. 3, the following describes in detail a vehicle control method according to an embodiment of this application. The method may be performed by a controller. The controller may be a controller 110 in the foregoing steering system, or may be a chip, a circuit, a component, a system, or a mobile terminal disposed in a vehicle, or may be another device in the Internet of Vehicles, such as a road side unit (road side unit, RSU) or an application server. This is not limited in this application.

The method includes at least the following several steps.

S310: Determine, based on status information of the vehicle, that the vehicle satisfies a condition to perform the steering return.

The status information of the vehicle includes first status information, and the first status information includes information that an initial turning angle of a turning wheel is greater than a first threshold. The first threshold is a preset wheel turning angle threshold. The initial turning angle of the turning wheel being greater than the first threshold may be understood as the turning wheel is at a large turning-angle. The first threshold may be set based on an actual situation. For example, the first threshold may be set to 15°.

For example, the controller may obtain the initial turning angle of the turning wheel through a sensor installed on the turning wheel, and determine that the initial turning angle is greater than the first threshold. Alternatively, the controller may indirectly obtain the initial turning angle of the turning wheel through conversion of sensing data of an angular displacement sensor or a linear displacement sensor in the steering system.

The status information of the vehicle may further include second status information, and the second status information includes status change information of the vehicle. The controller may determine, through the status change information of the vehicle, whether a user has a need to park for a long time. In other words, the controller determines, based on the status change information, that the vehicle is currently in a state that involves long time parking. For example, the status change information may include change information of a key switch, a one-button start switch, or at least one of an alternating current charging state, a direct current charging state, or a wireless charging state of the vehicle.

For example, for a vehicle equipped with a key switch, it can be determined that the vehicle is currently in the state that involves long time parking when the controller determines that the key switch is switched from an on (On) position to an off (Off) position. For a vehicle equipped with a one-button start switch, it can be determined that the vehicle is currently in the state that involves long time parking when the controller determines that a user presses the one-button start switch to switch the vehicle from a driving state to a fire-off or power-off state. For an electric vehicle, it can be determined that the vehicle is currently in the state that involves long time parking when the controller determines that a driver performs an alternating current charging on the vehicle. Optionally, in this scenario, it can be determined that the vehicle is currently in the state that involves long time parking by determining that a remaining charging time of the vehicle is greater than a threshold. In application scenarios of the foregoing different vehicle types, whether the user has the need to park for a long time can be further determined with reference to a gear state, a handbrake state or a state of an electronic parking brake, a driving speed state, and the like of the vehicle. It should be understood that, the status change information of the vehicle in this application includes but is not limited to the foregoing status change information. Status change information of the vehicle that can be used to determine that a user has a need to park for a long time falls within scope of this application.

Vehicle mis-steering caused by misjudging the driver's parking intention can be avoided by determining that the vehicle is currently in the state that involves long time parking. This reduces safety risks.

Optionally, the status information of the vehicle may further include third status information, and the third status information can indicate that the vehicle is currently capable of steering assistance. For example, the third status information may include working status information of the steering system, a direct current-direct current (DC/DC) converter, and a main power source, such as whether the steering system, the DC/DC converter, and the main power source are normal or faulty. That the controller determines, based on the third status information, that the vehicle satisfies the condition to perform the steering return may be understood as the controller determines, based on the third status information, that the vehicle is currently capable of steering assistance.

It should be understood that the controller may perform the steering return process if the controller determines, based on the foregoing status information of the vehicle, that the vehicle satisfies the condition to perform the steering return. In a possible implementation, the controller may first determine that the vehicle is currently in the state that involves long time parking, then determine, based on the third status information, that the vehicle is currently capable of steering assistance, determine that the initial turning angle of the turning wheel is greater than the first threshold, and finally perform the steering return process. A time sequence in which the controller determines different status information of the vehicle is not limited in this application.

Optionally, if the controller determines, based on the foregoing status information of the vehicle, that the vehicle does not satisfy the condition to perform the steering return, the controller may determine to exit the steering return process.

Optionally, before the controller performs the steering return process, the method may further include S220: requesting a delayed cutting off of the main power source of the vehicle.

Generally, the vehicle controller may control to cut off the main power source of the vehicle when it is determined that some status information of the vehicle changes, for example, a key switch switches from an on (On) position to an off (Off) position, or a one-button start switch is switched from an on state to an off state.

The vehicle controller may include a vehicle control unit (vehicle control unit, VCU) or a controller of main power source (for example, a battery controller or an engine control unit). The main power source of the vehicle may be a vehicle power source providing energy for a system in the vehicle. The main power source of the vehicle may include a drive apparatus and an energy source of the vehicle, and the drive apparatus can be configured to convert the energy source into mechanical energy. For example, the drive apparatus may be an internal combustion engine, an electric motor, an air compression engine, or a combination of other types of engines, for example, a hybrid engine including a gasoline engine and an electric motor, or a hybrid engine including an internal combustion engine and an air compression engine. The energy source may include gasoline, diesel, other oil-based fuels, propane, other compressed gas - based fuels, ethanol, a solar panel, a battery, and other power sources.

The controller may request the vehicle controller to delay cutting off the vehicle power source before performing the steering return process. A delay time (a second preset time period) may be set to be greater than or equal to a preset time for performing the steering return process.

In this embodiment of this application, it can be ensured that electric energy of a subsequent self-return process of the turning wheel comes from the main power source by requesting the delayed cutting off of the main power source of the vehicle, so as to avoid a low state of battery caused by performing the steering self-return.

S230: Perform the steering return process in a first preset time period.

Specifically, after determining that the vehicle satisfies the condition to perform the steering return, the controller may control a steering execution mechanism to drive the turning wheel to perform the steering return process based on the first function in the first preset time period, until a condition for terminating the performed steering return process is met.

The first preset time period is a longest time that the self-return lasts. To be specific, the self-return of the turning wheel is completed within the first preset time period. When the first preset time period expires, the controller determines to exit the self-return process.

Optionally, the controller may set duration of the first preset time period based on a size of the initial turning angle of the turning wheel. For example, a mapping relationship between the turning angle of the turning wheel and the duration of the first preset time period are configured in the controller, so that the controller determines the duration of the first preset time period based on the mapping relationship.

The termination condition may include at least one of the following conditions:

Duration of performing the steering return exceeds the duration of the first preset time period, or a current turning angle of the turning wheel is less than a second threshold.

The second threshold may represent an error value of a turning wheel return. To be specific, the turning wheel may be considered to reach the aligned state when the turning wheel returns and forms any angle within the second threshold. For example, the second threshold may be 3 degrees. The second threshold may be set based on an actual situation. This is not limited in this application.

According to the method provided in this embodiment of this application, the steering return process is terminated when the duration of performing the steering return exceeds the duration of the first preset time period. This can avoid overload of a steering assistance motor caused by turning wheel being blocked in the steering return process.

The first function may represent a first kinematic characteristic of the turning wheel. In a possible implementation, the first function is represented by the following formula:

$$\theta(t) = \theta_{max}\left[\frac{t}{T} - \frac{1}{2\pi}\sin\left(2\pi t/T\right)\right]$$

(1)

$\theta_{max}$ represents the initial turning angle of the turning wheel, 7 represents the duration of the first preset time period, and $\theta(t)$ represents a currently-returned angle (unit: rad). A difference between the initial turning angle of the turning wheel and the currently-returned angle is a current turning angle of the turning wheel. It may be understood that, at a start point of the first preset time period, the initial turning angle of the turning wheel is equal to the current turning angle of the turning wheel.

That is, the first kinematic characteristic of the turning wheel includes an angle change of the turning wheel return. The angle change of the turning angle represented by the function features gradual increase, followed by a rapid increase, and then a gradual decrease. Particularly, first-order differentials of angles at $t=0$ and $t=T$ are 0. In other words, angular velocities at a start point and an end point of the turning wheel return process represented by the first function are 0. Stability of the steering return can be ensured when the controller performs the steering return process based on the first function, so as to reduce control difficulty and improve control precision.

It should be noted that the first function may further include another function form, such as a combination of another polynomial and another trigonometric function, and a first-order differential of the first function is 0 or approaches 0. A specific form of the first function is not limited in this application. Second, the kinematic characteristic may be converted into a kinematic characteristic of any component of a transmission and assistance mechanism in the steering system based on a mechanical kinematics relationship between the turning wheel and another component in a steering transmission mechanism. Therefore, using a similar function to describe a kinematic characteristic of any component in the steering system falls within the scope of this application.

Optionally, the first kinematic characteristic of the turning wheel may further include an angular velocity change of the turning wheel return, as shown in formula (2):

$$\omega(t) = \frac{\theta_{max}}{T}\left[1 - \cos\left(2\pi t/T\right)\right]$$

(2)

$\theta_{max}$ represents the initial turning angle of the turning wheel, T represents first preset duration, and $\omega(t)$ represents an angular velocity of a current return (unit: rad/s).

Optionally, the first kinematic characteristic of the turning wheel may further include an angular acceleration change of the turning wheel return, as shown in formula (3):

$$a(t) = \frac{2\pi\theta_{max}}{T'^2}\sin\left(2\pi t/T\right)$$

(3)

$\theta_{max}$ represents the initial turning angle of the turning wheel, $T$ represents first preset duration, and $a(t)$ represents an angular acceleration of the current return (unit: rad/s$^2$).

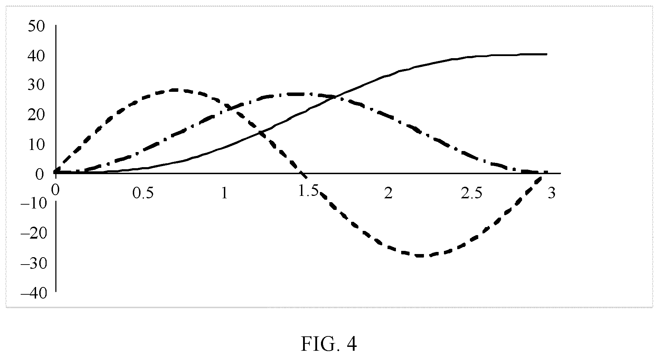

Taking an initial turning angle of 40 degrees of the turning wheel and first preset duration of 3 seconds as an example, a curve of a function using an angle, an angular velocity, and an angular acceleration to represent the first kinematic characteristic of the turning wheel is shown in FIG. 4.

Optionally, that the controller performs the self-return process based on the first function in the first preset time period specifically includes the controller determines the current turning angle of the turning wheel at an interval of the first time interval.

The first time interval may be given at a millisecond level. For example, the first time interval is 10 ms. The current turning angle of the turning wheel may be a difference between the initial turning angle and the current return angle. It may be understood that the current return angle of the turning wheel is determined by the controller based on the first function.

The controller continues to perform the steering return process, and re-determines the turning angle of the turning wheel after a next first time interval ends if the controller determines that the current turning angle of the turning wheel is greater than the second threshold, that is, the turning wheel currently does not reach the aligned state. The controller determines to stop performing the steering return process if the controller determines that the current turning angle of the turning wheel is less than the second threshold, so as to enable a closed-loop control of the steering return process.

Optionally, before the controller performs the steering return process, the method may further include S340: prompting the user with information that the turning wheel does not currently return to its central position, so as to determine whether to perform the steering return process.

Specifically, the controller may determine, based on a value of a state flag, whether to prompt the user with the information that the turning wheel does not currently return to its central position. For example, the value of the state flag may be "0" or "1". When the value of the state flag is "1", the controller determines to prompt the user with the status information that the turning wheel does not currently return to its central position. On the contrary, when the value of the state flag is "0", the controller determines not to prompt the user with the status information that the turning wheel does not currently return to its central position. The value of the state flag may be preconfigured, or may be determined by input of upper-layer application software. This is not limited in this application.

For example, the controller may prompt, through a user interface in the vehicle, the user with the status information that the turning wheel does not currently return to its central position. The controller may send first information to the user interface, where the first information includes information that the turning wheel does not return to its central position, and the first information may further include information asking the user whether to perform turning wheel alignment. The controller may further receive second information from the user interface, where the second information may include information entered by the user on whether to perform the turning wheel alignment. If the second information includes information entered by the user on determining to perform the steering return, the controller starts to perform the steering return process; if the second information includes information about not performing the steering return, the controller determines to exit the steering return process. Alternatively, the controller may start a first timer after sending the first information. If the controller does not receive the second information after the first timer expires, the controller may also control to exit the steering return process.

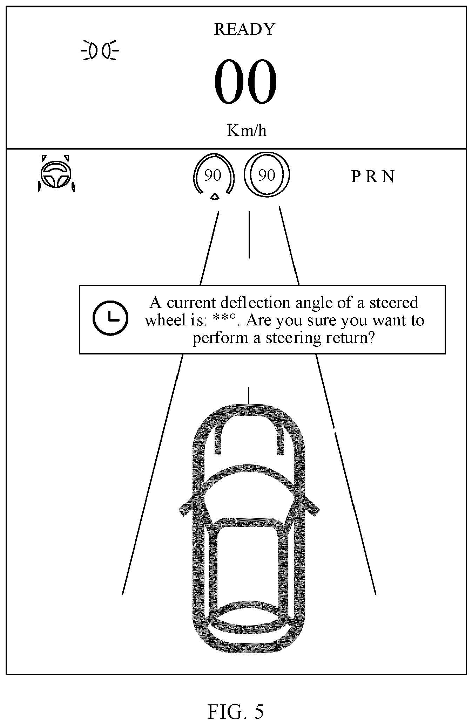

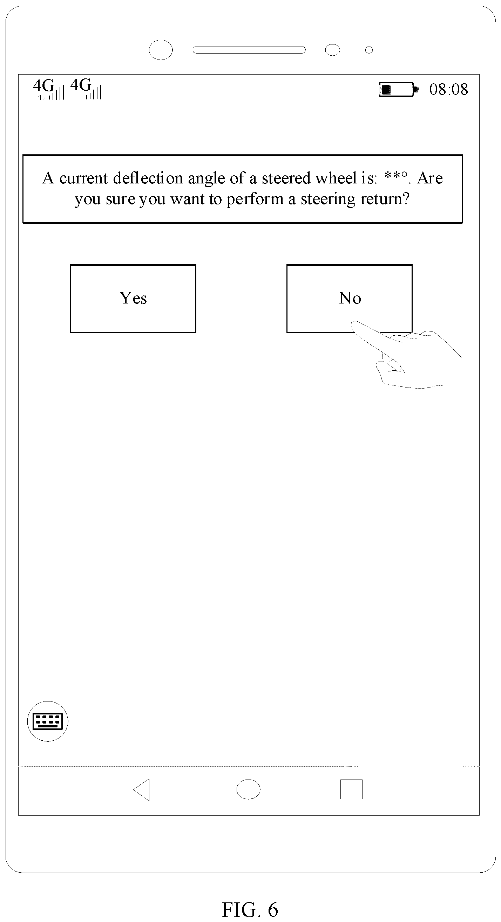

The user interface may be a human-computer interaction interface in the vehicle. As shown in FIG. 5, the first information may be displayed in a form of a pop-up window to prompt the user with the information that the turning wheel does not currently return to its central position. Optionally, the controller may further communicate with another terminal device outside the vehicle, and prompt the another terminal device with the first information, as shown in FIG. 6, so that the user can remotely control whether to perform the steering return process.

In this embodiment of this application, a self-return process can be performed more intelligently and user-friendly and the driver's intention to park can be prevented from being misjudged, by prompting, through the user interface, the information that the turning wheel does not currently return to its central position and by determining whether to perform the self-return process by receiving indication information of the user.

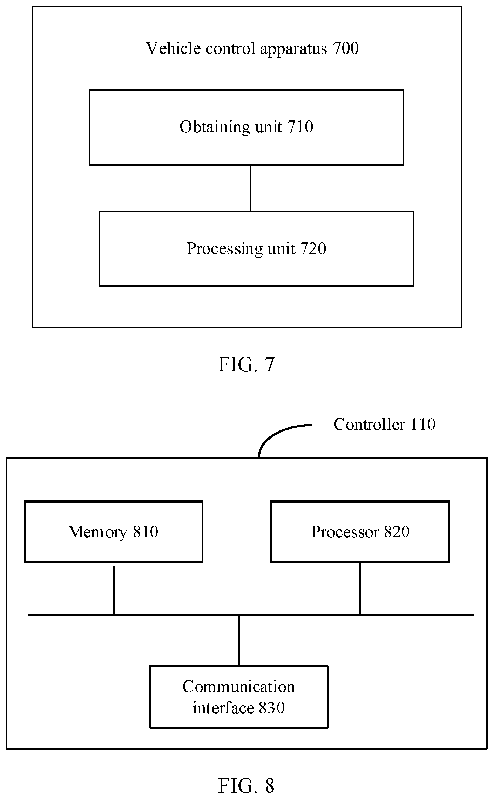

With reference to FIG. 2 and FIG. 6, the foregoing describes in detail the vehicle control method provided in embodiments of this application. With reference to FIG. 7 to FIG. 9, the following describes in detail a vehicle control apparatus provided in this embodiment of this application.

FIG. 7 is a structural block diagram of a vehicle control apparatus 700 according to this application. As shown in FIG. 7, the apparatus 700 includes an obtaining unit 710 and a processing unit 720.

The obtaining unit 710 is configured to obtain status information of a vehicle.

The status information of the vehicle may include an initial turning angle of a turning wheel, first status information of the vehicle, and status change information of the vehicle.

The processing unit 720 is configured to determine, based on the status information of the vehicle, whether the vehicle satisfies a condition to perform the steering return.

The processing unit 720 may be further configured to request a delayed cutting off of a main power source of the vehicle, and perform a steering return process in a first preset time period.

The processing unit 720 is specifically configured to perform a self-return process in a first time period based on a first kinematic characteristic of the turning wheel, where the first kinematic characteristic may include a change of an angle, an angular velocity, or an angular acceleration of a turning wheel return.

For example, the obtaining unit 710 includes a sending unit or a receiving unit.

The sending unit is configured to prompt a user with status information that the turning wheel does not currently return to its central position, so as to determine whether to perform the steering return process. The receiving unit is configured to receive information entered by the user that is used to determine whether to perform turning wheel alignment.

The apparatus 700 is corresponding to an entity for executing the foregoing method embodiment. The apparatus 700 may be the vehicle in the method embodiment, or a chip, a circuit, a component, a system, or a functional module in the vehicle in the method embodiment, or may be another device (for example, a road side unit RSU or an application server) in the Internet of Vehicles. Corresponding units of the apparatus 700 are configured to perform corresponding steps in the method embodiment shown in FIG. 3.

Only one or more of the units in the apparatus 700 may be implemented by software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC). The foregoing units may exist independently, or may be all or partially integrated.

FIG. 8 is a schematic block diagram of a controller 110 according to an embodiment of this application. The controller shown in FIG. 8 may include a memory 810, a processor 820, and a communication interface 830. The memory 810, the processor 820, and the communication interface 830 are connected through an internal connection path. The memory 810 is configured to store instructions. The processor 820 is configured to execute the instructions stored in the memory 820 so as to control the communication interface 830 to receive/send information. Optionally, the memory 810 may be coupled to the processor 820 through an interface, or may be integrated with the processor 820.

It should be noted that the communication interface 830 uses an apparatus such as but not limited to an input/output interface (input/output interface) to implement communication between the controller and another device or a communication network.

In an implementation process, steps in the foregoing method may be implemented by using a hardware integrated logic circuit in the processor 820, or by using instructions in a form of software. The method provided with reference to this embodiment of this application may be directly performed by the hardware processor, or may be performed by a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory 810, and the processor 820 reads information in the memory 810 and completes the steps of the foregoing method in combination with hardware of the processor 820. To avoid repetition, details are not described herein again.

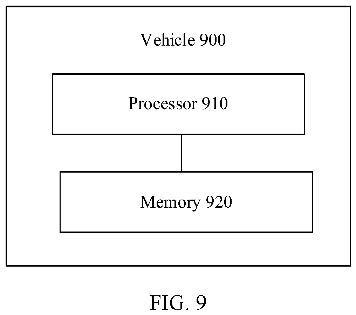

FIG. 9 is a schematic diagram of a structure a vehicle 900 applicable to an embodiment of this application. For ease of description, FIG. 9 shows only main components of the vehicle. As shown in FIG. 9, the vehicle 900 includes a processor 810 and a memory 920.

The memory 920 stores computer program instructions, and the processor 910 runs the computer program instructions to perform the vehicle control method described in the method embodiment shown in FIG. 3.

This application further provides a computer-readable storage medium, and the computer-readable storage medium stores instructions. When the instructions are run on a computer, the vehicle control apparatus is enabled to perform the steps in the method shown in FIG. 3.

This application further provides a computer program product including instructions. When the computer program product runs on a computer, the vehicle control apparatus is enabled to perform the steps in the method shown in FIG. 3.

This application further provides a chip including a processor. The processor is configured to read and run a computer program stored in a memory, so as to perform the corresponding operation and/or procedure performed by a first vehicle in the vehicle control method provided in this application. Optionally, the chip further includes the memory. The memory is connected to the processor through a circuit or a wire. The processor is configured to read and execute the computer program in the memory. Optionally, the chip further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A vehicle control method, wherein the method comprises:

   determining, based on first status information of a vehicle, that the vehicle needs to perform a steering return process, wherein the first status information comprises information that an initial turning angle of a turning wheel of the vehicle is greater than a first threshold;
   determining, based on second status information of the vehicle, that a user has a need to park for a long time, wherein the second status information comprises status change information of the vehicle; and
   performing the steering return process in a first preset time period, wherein the steering return process is used to change the initial turning angle of the turning wheel.

2. The method according to claim 1, wherein the status change information of the vehicle comprises change information of a key switch, a one-button start switch, and at least one of an alternating current charging state, a direct current charging state, or a wireless charging state of the vehicle.

3. The method according to claim 2, wherein the determining, based on second status information of the vehicle, that a user has a need to park for a long time comprises:
   if it is determined that the key switch is switched from an on position to an off position, the one-button start switch is switched from an on state to an off state, and the vehicle is in the at least one of the alternating current charging state, the direct current charging state, or the wireless charging state, determining that the user has the need to park for a long time.

4. The method according to any one of claims 1 to 3, wherein before the performing the steering return process in a first preset time period, the method further comprises:
   determining third status information of the vehicle, wherein the third status information indicates that the vehicle is currently capable of steering assistance, and the third status information comprises at least one of working status information of a steering system, working status information of a direct current-direct current converter, and working status information of a main power source of the vehicle.

5. The method according to any one of claims 1 to 4, wherein the performing the steering return process in a first preset time period comprises:
performing the steering return process based on a first function in the first preset time period, wherein the first function represents a kinematic characteristic of the turning wheel, and first-order differentials of the first function at a start point and an end point of the first preset time period are 0 or approach 0.

6. The method according to claim 5, wherein the first function is represented by the following formula:

$$\theta(t) = \theta_{max}\left[\frac{t}{T} - \frac{1}{2\pi}\sin\left(2\pi t \Big/ T\right)\right],$$

wherein

$\theta_{max}$ represents the initial turning angle of the turning wheel, $T$ represents duration of the first preset time period, $\theta(t)$ represents a current angle that the turning wheel has returned, and a difference between the initial turning angle of the turning wheel and the current angle that the turning wheel has returned is a current turning angle of the turning wheel.

7. The method according to any one of claims 1 to 6, wherein before the performing the steering return process based on a first function in the first preset time period, the method further comprises:
requesting a vehicle controller to cut off the main power source of the vehicle after a second preset time period, wherein duration of the second preset time period is greater than or equal to the duration of the first preset time period.

8. The method according to any one of claims 1 to 7, wherein the main power source of the vehicle comprises a drive apparatus and an energy source of the vehicle.

9. The method according to any one of claims 1 to 8, wherein the method further comprises:

when it is determined that the first preset time period ends, stopping performing the steering return process; or
when it is determined that the initial turning angle of the turning wheel of the vehicle is less than a second threshold, stopping performing the steering return process.

10. The method according to any one of claims 1 to 9, wherein before the performing the steering return process based on a first function in the first preset time period, the method further comprises:
sending first information to a user interface of the vehicle, wherein the user interface is configured to provide information for a user of the vehicle or receive information entered by a user of the vehicle, and the first information comprises the information that the initial turning angle of the turning wheel is greater than the first threshold.

11. The method according to claim 10, wherein after the sending first information to a user interface of the vehicle, the method further comprises:

receiving second information entered through the user interface; and
performing the steering return process if the second information comprises information about performing the steering return process; or
exiting the steering return process if the second information comprises information about not performing the steering return process.

12. The method according to claim 10, wherein after the sending first information to a user interface of the vehicle, the method further comprises:

enabling a first timer; and
exiting the steering return process if the information entered through the user interface is not received after the first timer expires.

13. A vehicle control apparatus, wherein the apparatus comprises:

a processing unit, configured to: determine, based on first status information of a vehicle, that the vehicle needs to perform a steering return, wherein the first status information comprises information that an initial turning angle of a turning wheel of the vehicle is greater than a first threshold;

determine, based on second status information of the vehicle, that a user has a need to park for a long time, wherein the second status information comprises status change information of the vehicle; and

perform a steering return process in a first preset time period, wherein the steering return process is used to change the initial turning angle of the turning wheel.

14. The apparatus according to claim 13, wherein the status change information of the vehicle comprises change information of a key switch, a one-button start switch, and at least one of an alternating current charging state, a direct current charging state, or a wireless charging state of the vehicle.

15. The apparatus according to claim 14, wherein the processing unit is specifically configured to:
if it is determined that the key switch is switched from an on position to an off position, the one-button start switch is switched from an on state to an off state, and the vehicle is in the at least one of the alternating current charging state, the direct current charging state, or the wireless charging state, determine that the user has the need to park for a long time.

16. The apparatus according to any one of claims 13 to 15, wherein the processing unit is further configured to:
determine third status information of the vehicle, wherein the third status information indicates that the vehicle is currently capable of steering assistance, and the third status information comprises at least one of working status information of a steering system, working status information of a direct current-direct current converter, and working status information of a main power source of the vehicle.

17. The apparatus according to any one of claims 13 to 16, wherein the processing unit is specifically configured to:
perform the steering return process based on a first function in the first preset time period, wherein the first function represents a kinematic characteristic of the turning wheel, and first-order differentials of the first function at a start point and an end point of the first preset time period are 0 or approach 0.

18. The apparatus according to claim 17, wherein the first function is represented by the following formula:

$$\theta(t) = \theta_{\max}\left[\frac{t}{T} - \frac{1}{2\pi}\sin\left(2\pi t \middle/ T\right)\right],$$

wherein
$\theta_{\max}$ represents the initial turning angle of the turning wheel, $T$ represents duration of the first preset time period, $\theta(t)$ represents a current angle that the turning wheel has returned, and a difference between the initial turning angle of the turning wheel and the current angle that the turning wheel has returned is a current turning angle of the turning wheel.

19. The apparatus according to any one of claims 13 to 18, wherein the processing unit is further configured to:
request a vehicle controller to cut off the main power source of the vehicle after a second preset time period, wherein duration of the second preset time period is greater than or equal to the duration of the first preset time period.

20. The apparatus according to any one of claims 13 to 19, wherein the main power source of the vehicle comprises a drive apparatus and an energy source of the vehicle.

21. The apparatus according to any one of claims 13 to 20, wherein the processing unit is further configured to:

when it is determined that the first preset time period ends, stop performing the steering return process; or
when it is determined that the initial turning angle of the turning wheel of the vehicle is less than a second threshold, stop performing the steering return process.

22. The apparatus according to any one of claims 13 to 21, wherein the apparatus further comprises:
a transceiver unit, configured to send first information to a user interface of the vehicle, wherein the user interface is configured to provide information for a user of the vehicle or receive information entered by a user of the vehicle, and the first information comprises the information that the initial turning angle of the turning wheel is greater than the first threshold.

23. The apparatus according to claim 10, wherein

the transceiver unit is further configured to receive second information entered through the user interface; and
the processing unit is further configured to perform the steering return process if the second information comprises information about performing the steering return process; or
the processing unit is further configured to exit the steering return process if the second information comprises information about not performing the steering return process.

24. The apparatus according to claim 10, wherein the processing unit is further configured to:

enable a first timer; and
exit the steering return process if the information entered through the user interface is not received after the first timer expires.

25. A steering system, comprising a memory and a processor, wherein the memory stores computer program instructions, and the processor runs the computer program instructions to perform the method according to any one of claims 1 to 12.

26. A vehicle, comprising a memory and a processor, wherein the memory stores computer program instructions, and the processor runs the computer program instructions to perform the method according to any one of claims 1 to 12.

27. A vehicle control apparatus, comprising a memory and a processor, wherein the memory stores computer program instructions, and the processor runs the computer program instructions to perform the method according to any one of claims 1 to 12.

28. A vehicle control apparatus, comprising:

a processor and an interface circuit, wherein
the processor is coupled to a memory through the interface circuit, and the processor is configured to perform program code in the memory, so as to implement the method according to any one of claims 1 to 12.

29. A computer-readable storage medium, comprising computer instructions, wherein when the computer instructions are run by a processor, the vehicle control apparatus is enabled to perform the method according to any one of claims 1 to 12.

30. A computer program product, wherein when the computer program product runs on a processor, the vehicle control apparatus is enabled to perform the method according to any one of claims 1 to 12.

Steering system 100

| User 101 | Human-computer interaction interface 130 | Controller 110 | Another controller 102 |

Steering mechanism assembly 120

Steered wheel assembly 103

FIG. 1

FIG. 2

FIG. 3

FIG. 4

FIG. 5

FIG. 6

Vehicle control apparatus 700

Obtaining unit 710

Processing unit 720

FIG. 7

Controller 110

Memory 810

Processor 820

Communication
interface 830

FIG. 8

Vehicle 900

Processor 910

Memory 920

FIG. 9

## INTERNATIONAL SEARCH REPORT

| International application No. |
| --- |
| **PCT/CN2021/121701** |

| A. | CLASSIFICATION OF SUBJECT MATTER |
| --- | --- |
| | B62D 137/00(2006.01)i; B62D 6/00(2006.01)i |

According to International Patent Classification (IPC) or to both national classification and IPC

| B. | FIELDS SEARCHED |
| --- | --- |

Minimum documentation searched (classification system followed by classification symbols)

    B62D

Documentation searched other than minimum documentation to the extent that such documents are included in the fields searched

Electronic data base consulted during the international search (name of data base and, where practicable, search terms used)

    CNKI, CNPAT, DWPI, SIPOABS: 转向, 回位; steer+, changeover

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 102795262 A (HANGZHOU BRANCH OF ZHEJIANG GEELY AUTOMOBILE RESEARCH INSTITUTE CO., LTD. et al.) 28 November 2012 (2012-11-28) description, paragraphs [0027]-[0054] | 1-30 |
| A | KR 20100007321 A (HYUNDAI MOTOR CO., LTD.) 22 January 2010 (2010-01-22) entire document | 1-30 |
| A | KR 20050109704 A (HYUNDAI MOBIS CO., LTD.) 22 November 2005 (2005-11-22) entire document | 1-30 |
| A | WO 0064726 A1 (VOLKSWAGEN AG et al.) 02 November 2000 (2000-11-02) entire document | 1-30 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 June 2022** | **29 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/121701**

| Patent document cited in search report | | | Publication date (day/month/year) | Patent family member(s) | | | Publication date (day/month/year) |
|---|---|---|---|---|---|---|---|
| CN | 102795262 | A | 28 November 2012 | None | | | |
| KR | 20100007321 | A | 22 January 2010 | None | | | |
| KR | 20050109704 | A | 22 November 2005 | None | | | |
| WO | 0064726 | A1 | 02 November 2000 | EP | 1173356 | A1 | 23 January 2002 |
| | | | | DE | 19918355 | A1 | 26 October 2000 |

Form PCT/ISA/210 (patent family annex) (January 2015)